# EUROPÄISCHE PATENTANMELDUNG

(11) **EP 1 112 980 A1**
(43) Veröffentlichungstag der Anmeldung: **04.07.2001**
(21) Anmeldenummer: 00125336.8
(22) Anmeldetag: 30.11.2000
(51) Int. Cl.: C03B 37/085, C03B 3/00, C03B 3/02

(54) **Vorrichtung und Verfahren zum Wiederaufschmelzen von Glas**

(30) Priorität: 30.12.1999 DE 19963867
(71) Anmelder: Schott Glas, 55122 Mainz (DE); CARL-ZEISS-STIFTUNG trading as SCHOTT GLAS, 55122 Mainz (DE)
(72) Erfinder: Langsdorf, Andreas, Dr., 60431 Frankfurt am Main (DE); Römer, Hildegard, Dr., 61184 Karben (DE); Kissl, Paul, 55127 Mainz (DE)
(74) Vertreter: Dr. Weitzel & Partner

(57) **Zusammenfassung**

Die Erfindung betrifft eine Vorrichtung zum Wiederaufschmelzen von Glasstäben;
- mit wenigstens einer Aufnahmehülse, die zum Aufnehmen des Glasstabes an ihrem oberen Ende einen Einlaß, und zum Ablassen von Schmelze an ihrem unteren Ende einen Auslaß aufweist;
- mit einem Tiegel, der sich unterhalb der Aufnahmehülse befindet, oben offen ist und unten einen Ablauf aufweist;
- mit einer Heizeinrichtung zum Beheizen des Tiegelinhaltes;
- die Unterkante der Aufnahmehülse befindet sich zur Vermeidung einer Verjüngung des Glasstromes auf der Höhe des Spiegels des Schmelzbades oder darüber;
- dem Tiegel ist eine Ablaufhülse nachgeschaltet;
- der Ablaufhülse ist eine Einrichtung zur Tropfengenerierung (Nadel-oder Saugspeiser) zugeordnet.

## Beschreibung

Die Erfindung betrifft eine Vorrichtung und ein Verfahren zum Wiederaufschmelzen von Glashalbzeugen. Dabei handelt es sich um Glashalbzeug, die in Form von Stäben vorliegen. Die Stäbe haben meist einen kreisförmigen Querschnitt. Das Wiederaufschmelzen von solchen Glashalbzeugen ist zur Weiterverarbeitung notwendig. Es ist meist mit einem Portionieren von Glas verbunden.

Prinzipiell lässt sich Glas - entweder vorportioniert, oder in größeren Mengen mit der Notwendigkeit einer nachfolgenden Portionierung, aufschmelzen.

Der Vorgang des Wiederaufschmelzens von portioniertem Glas ist problematisch. Ab einer bestimmten Temperatur kommt es nämlich zu einem Haften des Glases an der Unterlage beziehungsweise am Formwerkzeug. Die sogenannte Klebetemperatur (10¹⁰dPas) liegt unterhalb der Erweichungstemperatur (10^{7,6}dPas), so daß es beim Wiederaufschmelzen zu einem Haften des Glases an der Wandung des Schmelzgefäßes kommt.

Es könnte daran gedacht werden, die Wandung zu kühlen, so daß im Wandbereich die Klebetemperatur nicht erreicht wird. Jedoch kann beim Aufheizprozeß die Kühlung gar nicht so stark sein, daß die Kontakttemperatur unterhalb der Klebetemperatur bleibt. Außerdem kommt es im Glas zu großen Inhomogenitäten der Temperatur.

Als Abhilfe arbeitet man mit Trennmitteln unterschiedlicher Art. Diese führen jedoch zu unerwünschten Veränderungen der Oberfläche des Glases.

Die andere Möglichkeit besteht darin, größere Mengen aufzuschmelzen und sodann zu portionieren. Dabei braucht das Glashalbzeug nicht in Form von regelmäßigen Körpern wie Stangen oder Blöcken bereitgestellt zu werden, sondern kann als Glasscherben im Tiegel aufgeschmolzenb werden. Zum einen ist dieses Verfahren jedoch im allgemeinen ein nicht-kontinuierliches; kontinuierliche Verfahren erfordern besondere Maßnahmen und damit besonderen Aufwand. Zum anderen bilden sich hierbei in jedem Falle Hohlräume, die mit Luft oder einem anderen Gas gefüllt sind. An den Glasscherben haftet adsorbiertes Gas. Gelangen die Scherbenoberflächen in die Schmelze, so wird das adsorbierte Gas von den Scherbenoberflächen freigesetzt, und es bilden sich Blasen. Um diese Blasen wieder aus der Schmelze zu entfernen, ist eine starke Erhöhung der Schmelztemperatur auf Läutertemperatur notwendig. Das heißt, dass der Schmelzprozess ein weiteres Mal vollständig durchlaufen werden muss. Dies ist energetisch sehr ungünstig und unwirtschaftlich.

Man kann auch bei Verwendung von Glasstäben die freien Stabenden aufheizen und damit aufschmelzen. Dabei treten zwar die oben genannten Probleme nicht auf. Jedoch kommt es hierbei zu einem kontinuierlichen Ablaufen des Glases in Gestalt eines sich nach unten verjüngenden Glasstromes. Eine Tropfenportionierung ist nicht möglich.

JP 63/236729 A zeigt eine Vorrichtung ,mit der eine Glasfaser gezogen wird. Am Auslauf einer umlaufenden Düse entsteht dabei eine Ziehzwiebel. Diese Vorrichtung dient somit nicht dem Wiederaufschmelzen und Portionieren von Glasstäben.

Der Erfindung liegt die Aufgabe zugrunde, Maßnahmen anzugeben, mit welchen ein Wiederaufschmelzen und Portionieren von Glashalbzeug möglich ist, ohne daß die Probleme des Klebens, der Veränderung der Glasoberfläche oder des Gaseinschlusses auftreten; ferner soll ein energetisch und wirtschaftlich günstiges Verfahren angegeben werden, mit welchem Halbzeug wieder erwärmt und für die Formgebung zur Verfügung gestellt werden kann.

Diese Aufgabe wird durch die unabhängigen Ansprüche gelöst. Die Lösung ist eine sehr einfache und erfordert einen verhältnismäßig geringen Aufwand.

Man geht demgemäß aus von einer Aufnahmehülse, die eine obere Aufnahmeöffnung zum Einführen eines Glasstabes, und eine untere Auslauföffnung aufweist. Der Hülse wird dabei ein Tiegel zugeordnet. Der Tiegel ist oben offen, so daß die Hülse wenigstens auf einem Teil ihrer Länge in den von der Tiegelwandung umschlossenen Raum eintauchen kann. Der Tiegel hat in seinem unteren Bereich einen Ablauf. Dabei ist jegliche Art von Tiegelbeheizung möglich, beispielsweise eine Widerstandsbeheizung und eine Strahlungsheizung. Eine vorteilhafte Ausführungsform ist das Vorsehen einer Spule, die die Wandung des Tiegels in bekannter Weise umgibt. Die Spule dient dem Einkoppeln von elektrischer Energie in den Tiegelinhalt.

Die Hülse ist zweckmäßigerweise derart gestaltet und bemessen, daß ihre Innenkontur der Außenkontur der zu verarbeitenden Glasstäbe entspricht. Die Hülse braucht nicht unbedingt vertikal zu sein. Sie kann auch gegen die Vertikale geneigt sein. Außerdem können statt einer auch mehrere Hülsen vorgesehen werden.

Durch entsprechende Zuordnung von Hülse und Tiegel wird erreicht, daß der Glasstab in der Hülse an seinem unteren Ende aufschmilzt. Im Tiegel selbst wurde zuvor ein Glasbad erschmolzen. Der Glasstab schmilzt an seinem unteren Ende langsam ab. Das abschmelzende und abfließende Material gelangt kontinuierlich in das genannte, im Tiegel befindliche Bad.

Wenn Energiekosten keine Rolle spielen, dann könne man die Halbzeuge unten einfach wieder aufschmelzen, bei niedrigen Viskositäten ausläutern und dann der Formgebung zuführen. Dieses Aufheizen auf Schmelz- bzw. Läutertemperatur kann durch die Erfindung wegfallen. Der Vorteil wird klar, wenn man bedenkt, dass die Läutertemperatur bei ca. 1600° C liegen kann, für die Formgebung hingegen nur Temperaturen in der Größenordnung von 1100° C notwendig sind.

Wesentlich für die Vorrichtung in ihrer allgemeinen Form ist lediglich, dass die Aufnahmehülse über einem Behälter angeordnet ist, der Glasschmelze enthält. Die Glasschmelze wird - gegebenenfalls erst nach weiterem Transport - portioniert. Auch ein zwischengeschalteter Homogenisierungsschritt ist denkbar. Dieser wird dann notwendig, wenn das eingebrachte Glas ein anderes als das im Behälter vorhandene ist.

Ein wesentlicher Vorteil es erfindungsgemäßen Verfahrens zum Wiederaufschmelzen und Portionieren ist die Kontinuität durch das ständige Nachführen der Glasstäbe. Dabei ist die Form der aufeinanderzusetzenden Glasstabenden entscheidend im Hinblick auf das Vermeiden oder Minimieren von Blaseneinschlüssen.

Unbehandelte Stabenden weisen aufgrund von Schrumpfung bei der Herstellung eine konkave Wölbung auf. Das Aufeinandersetzen zweier solcher Enden würde zu einem Gaseinschluß im zwischen den Enden entstehenden Hohlraum führen, der später im Speiser als Blasenschub, also Ausschuß, sichtbar würde.

Ein Stabende ist durch die zur Herstellung verwendete Gießform leicht beeinflußbar. Das Formen des anderen Stabendes muß durch mechanisches Nacharbeiten erfolgen und ist aufwendig. Aber zumindest kann man, wenn nötig, es so von der konkaven Wölbung befreien. Als geeignete Paare von Stabenden haben sich die Kombinationen erwiesen, bei denen das zu verdrängende Gas nach außen entweichen kann und nicht eingeschlossen wird.

Wird dieselbe Schmelzenmenge, die in portionierter Weise entfernt wird, dem Tiegel zugeführt, so bleibt das Volumen der Schmelze im Tiegel konstant. Das Niveau der Schmelze bleibt damit ebenfalls konstant. Werden diese Bedingungen eingehalten, so ist keine Höhen-Nachregelung der Aufnahmehülse notwendig.

Aus Gründen der Energieeinsparung sollte das Volumen des Tiegels gerade so groß sein, wie dies der Portionierungsprozess erfordert. Jede Vergrößerung dieses Volumens ist im Hinblick auf die Energiewirtschaft des Prozesses ungünstig.

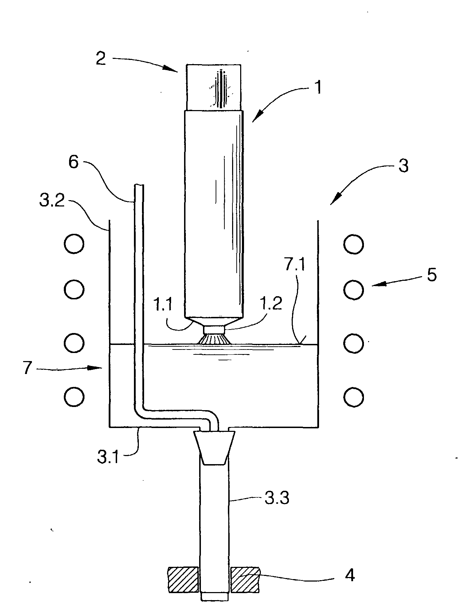

Die Erfindung ist anhand der Zeichnung näher erläutert. Die Zeichnung zeigt im Aufriß eine Einrichtung zum Wiederaufschmelzen von Glasstäben.

Man erkennt im einzelnen folgendes:

Es ist eine Aufnahmehülse 1 vorgesehen. Diese ist im vorliegenden Falle vertikal angeordnet. Sie ist oben offen zur Aufnahme eines Glasstabes 2. An ihrem unteren Ende verjüngt sie sich zunächst in einem kegelstumpfförmigen Teil 1.1 und geht sodann über in einen zylindrischen Teil 1.2.

Es ist ferner ein Tiegel 3 vorgesehen. Der Tiegel ist topfförmig. Er weist einen Boden 3.1 sowie eine zylindrische Wand 3.2 auf. Der Tiegel hat an seinem Boden einen Ablauf in Gestalt einer Ablaufhülse 3.3. Der Ablaufhülse 3.3 ist eine Heizeinrichtung 4 zugeordnet.

Die zylindrische Wand 3.2 des Tiegels 3 ist von einer Mittelfrequenzspule 5 umgeben. Über diese wird elektrische Mittelfrequenzenergie in den Tiegelinhalt eingekoppelt. Durch die erwärmte Tiegelwand und das erwärmte Glasbad wird die Aufnahmehülse 1 durch Wärmestrahlung über Tiegelwand und Glasbad vor allem ihrem unterem Bereich erwärmt.

Die Aufnahmehülse 1 ist im vorliegenden Falle aus Platin mit einer Wandstärke von 1 mm hergestellt. Die Aufnahmehülse ist in der Höhe verstellbar. Die Abschmelzmenge wird über die Höheneinstellung der Aufnahmehülse 1 geregelt.

Die erfindungsgemäße Vorrichtung arbeitet wie folgt:
In die Aufnahmehülse 1 wird ein Glasstab 2 eingeführt. Die Innenkontur der Aufnahmehülse 1 und die Außenkontur des Glasstabes sind derart bemessen, daß der Glasstab 2 von der Aufnahmehülse 1 satt umschlossen ist. Die von der Spule 5 erzeugte Temperatur im Tiegel 3 wird derart gesteuert, daß der Glasstab 2 an seinem unteren Ende aufschmilzt und das im Tiegel 3 sich einstellende Schmelzbad 7 in kontrollierter Weise mit nachströmendem Glas versorgt. Dabei wird das untere Ende der Aufnahmehülse, insbesondere der Bereich des kegelstumpfförmigen Teiles 1.1 und des zylindrischen Teiles 1.2, über die Strahlungswärme von der Wand 3.2 des Tiegels 3 sowie vom Spiegel 7.1 des Schmelzbades aufgeheizt. Auch kann die Aufnahmehülse 1 in ihrer Höhe justiert werden. Die Unterkante der Aufnahmehülse wird in der Regel einen Abstand von 1 bis 2 cm vom Spiegel 7.1 des Schmelzbades haben. Sogar ein Eintauchen des zylindrischen Teiles 1.2 in das Schmelzbad 7 ist denkbar. Je nach Abstand können die Abschmelzleistung und damit der Durchsatz variiert werden.

Der Glasstab 2 sinkt durch sein Eigengewicht immer tiefer in die Aufnahmehülse 1 ein, bis er weitgehend aufgeschmolzen ist. Bevor er restlos aufgeschmolzen ist, kann ein nachfolgender Glasstab in die Aufnahmehülse 1 von oben her eingeführt werden. Die Glasschmelze läßt sich dadurch kontinuierlich mit Glas versorgen. Die Ablaufhülse 3.3 des Tiegels kann mit einer Nadelspeisereinrichtung ausgestattet sein. Somit ist es möglich, den Glasdurchsatz durch die Vorrichtung in gewünschter Weise zu steuern. Auch kann die Ablaufhülse 3.3 mit einer Schere versehen sein, um Glastropfen für nachfolgende Produktionsschritte zu erzeugen.

Die Vorrichtung läßt sich überall dort anwenden, wo Glas benötigt wird, das für einen nachfolgenden Heißformgebungsprozeß auf hohe Temperaturen gebracht werden muß, die oberhalb der Klebetemperatur liegen. Mit der Vorrichtung werden sämtliche Probleme des Standes der Technik vermieden. Es kommt nicht zu einem Anhaften von Glas an den Wänden einer Formgebungseinrichtung. Es bedarf keines Trennmittels. Die Glasoberfläche unterliegt keiner Veränderung. Es bedarf keines nachgeschalteten Läuterungsprozesses.

Die dargestellte Vorrichtung umfasst einen Nadelspeiser 6.

Der dargestellte Tiegel ist im vorliegenden Falle ein Platintiegel. Die Induktionsheizung hat eine Leistung von 10 kHz. Stattdessen wäre auch eine 50 Hz-Widerstandsheizung oder eine Strahlungsheizung denkbar.

## Patentansprüche

1. Vorrichtung zum Wiederaufschmelzen von Glasstäben (2);
1.1 mit wenigstens einer Aufnahmehülse (1), die zum Aufnehmen des Glasstabes (2) an ihrem oberen Ende einen Einlaß, und zum Ablassen von Schmelze an ihrem unteren Ende einen Auslaß aufweist;
1.2 mit einem Tiegel (3), der sich unterhalb der Aufnahmehülse (1) befindet, oben offen ist und unten einen Ablauf (3.3) aufweist;
1.3 mit einer Heizeinrichtung (5) zum Beheizen des Tiegelinhaltes;
1.4 die Unterkante der Aufnahmehülse (1) befindet sich zur Vermeidung einer Verjüngung des Glasstromes auf der Höhe des Spiegels (7.1) des Schmelzbades (7) oder darüber;
1.5 dem Tiegel (3) ist eine Ablaufhülse (3.3) nachgeschaltet;
1.6 der Ablaufhülse (3.3) ist eine Einrichtung zur Tropfengenerierung (Nadel- oder Saugspeiser) zugeordnet.

2. Vorrichtung nach Anspruch 1, dadurch gekennzeichnet, dass die Heizeinrichtung zum Aufheizen des Tiegelinhaltes eine Spule (5) zum Einkoppeln von elektrischer Energie umfasst.

3. Vorrichtung nach Anspruch 1 oder 2, dadurch gekennzeichnet, dass Aufnahmehülse (1) und Tiegel (3) relativ zueinander derart angeordnet sind, dass die Aufnahmehülse (1) wenigstens auf dem unteren Teil ihrer Länge von der Tiegelwandung (3.2) umschlossen ist.

4. Vorrichtung nach einem der Ansprüche 1 bis 3, dadurch gekennzeichnet, dass sich der Auslaufbereich (1.1, 1.2) der Aufnahmehülse (1) in Auslaufrichtung kontinuierlich oder sprunghaft verjüngt.

5. Vorrichtung nach einem der Ansprüche 1 bis 4, dadurch gekennzeichnet, dass die Querschnittskontur der Innenfläche der Aufnahmehülse (1) wenigstens annähernd gleich der Querschnittskontur der Außenfläche des Glasstabes (2) ist.

6. Vorrichtung nach einem der Ansprüche 1 bis 5, dadurch gekennzeichnet, dass der Ablaufhülse (3.3) eine Heizeinrichtung (4) zugeordnet ist.

7. Vorrichtung nach einem der Ansprüche 1 bis 6, dadurch gekennzeichnet, dass - in Draufsicht gesehen - die Ablaufhülse (3.3) gegenüber der Aufnahmehülse (1) versetzt ist.

8. Vorrichtung nach einem der Ansprüche 1 bis 7, dadurch gekennzeichnet, dass die Aufnahmehülse (1) in ihrer Lage relativ zum Tiegel (3), insbesondere in ihrer Höhe verstellbar ist.

9. Verfahren zum Wiederaufschmelzen von Glasstäben; mit den folgenden Merkmalen:
9.1 es wird ein Glasstab (2) in das obere Ende einer Aufnahmehülse (1) eingeführt;
9.2 es wird unterhalb der Aufnahmehülse (1) ein Schmelzbad (7) mit einem Spiegel (7.1) bereitgestellt;
9.3 die Aufnahmehülse (1) wird derart positioniert, daß sich ihre Unterkante auf der Höhe des Spiegels (7.1) oder darüber befindet;
9.4 das untere Ende des Glasstabes (2) wird auf eine Temperatur oberhalb der Erweichungstemperatur des Glases aufgeheizt;
9.5 der Abschmelzvorgang wird derart gesteuert, daß ein kontinuierlicher Schmelzstrom in das Schmelzbad (7) bei Vermeidung einer Einschnürung eintritt;
9.6 aus dem Schmelzbad (7) wird Schmelze mittels einer Einrichtung zur Tropfengenerierung abgezogen.

10. Verfahren nach Anspruch 9, dadurch gekennzeichnet, dass das Abschmelzen des Glasstabes (2) durch Einkoppeln elektrischer Energie in den Tiegelinhalt oder durch Strahlungsheizelemente oder durch Brennerheizung vorgenommen wird.

11. Verfahren nach Anspruch 9 oder 10, dadurch gekennzeichnet, dass der Glasdurchsatz dadurch gesteuert wird, daß wenigstens einer der folgenden Parameter verändert wird:
- durch die Größe der zugeführten Energie;
- durch den Abstand zwischen der Unterkante der Aufnahmehülse (1) vom Spiegel (7.1) des Schmelzbades (7);
- durch eine Drosselung des aus dem Schmelzbad (7) austretenden Glasstromes.

12. Verfahren nach einem der Ansprüche 9 bis 11, dadurch gekennzeichnet, dass die verwendeten Glasstäbe (2) jeweils wenigstens ein Ende aufweisen, das mit einer konvexen Form (z. B. Kegel, Halbkugel) oder mit einer ebenen Fläche abschliesst, um einen Einschluss von Gas an der Stab-Stab-Stoßstelle zu vermeiden.
